Europäisches Patentamt

European Patent Office

Office européen des brevets

(19)

(11) Publication number: 0 389 173
A2

(12) # EUROPEAN PATENT APPLICATION

(21) Application number: 90302739.9

(22) Date of filing: 14.03.90

(51) Int. Cl.5: C08F 10/00, C08F 4/02,
C08F 4/60

(30) Priority: 20.03.89 FI 891313

(43) Date of publication of application:
26.09.90 Bulletin 90/39

(84) Designated Contracting States:
AT BE CH DE DK FR GB IT LI NL SE

(71) Applicant: NESTE OY

SF-06850 Kulloo(FI)

(72) Inventor: Luciani, Luciano
Via McAlister 37
I-44100 Ferrara(IT)
Inventor: Kostiainen, Arja
Lehtikujantie 20
SF-06400 Porvoo(FI)

(74) Representative: Browne, Robin Forsythe
Urquhart-Dykes & Lord Tower House Merrion
Way
Leeds LS2 8PA West Yorkshire(GB)

(54) Procedure for producing polymerising catalyst component, a polymerisation component, and use of the same.

(57) The present invention concerns a procedure for preparing a solid procatalyst composition of a catalyst system intended for polymerizing olefins, in which procedure the magnesium halide is dissolved and/or combined with an electron donor and treated with a transition metal compound. The invention also concerns said procatalyst composition and its use together with the cocatalyst for polymerizing olefins. The procedures known of prior art include the treatment of an at least to some extent crystalline magnesium chloride, which, with respect of the catalyst activity, is unfavourable, with an electron donor and a transition metal compound, or, thereafter, the preparation of a solid reaction product of the three components of the procatalyst composition from a solution, whereby also activity decreasing crystallinity is produced. In the present instance, it has been possible to increase the activity of the catalyst component by impregnating with electron donor solutions of the magnesium halide a separate carrier from which an excess of the electron donor is removed before the treatment with a transition metal compound. The separate carrier is advantageously silicon dioxide, an advantageous magnesium halide of magnesium chloride and an advantageous electron donor of a $C_1$-$C_{10}$ alkyl ester of an aliphatic carboxyl acid, such as ethyl acetate. An alpha-olefin, such as polyethylene, is polymerized with said procatalyst and e.g. with a trialkyl aluminium cocatalyst, either in one step into a polymer having a narrow molecular weight distribution, or in two or several steps into a polymer having a bimodal or wide molecular weight distribution.

# Procedure for producing polymerizing catalyst component, a polymerization component, and use of the same

The present invention concerns a procedure for preparing a solid procatalyst composition of a catalyst system intended for polymerizing olefins, in which a magnesium halide is dissolved and/or combined to an electron donor and is treated with a transition metal compound. The present invention also concerns a procatalyst composition prerpared using said procedure, comprising a reaction product of magnesium halide, electron donor, and a transition metal compound, and the use of said procatalyst composition for polymerizing or copolymerizing alpha-olefins.

For polymerizing olefins, a so-called Ziegler-Natta catalyst system is generally used, which consists of a so-called procatalyst and cocatalyst. The procatalyst is based on a compound of a transition metal belonging to of one of the groups IVB-VIII of the periodic system of the elements, and the cocatalyst is based on an organometallic compound of a metal belonging to one of the groups IA-IIIA of the periodic system of the elements. The catalyst system generally also includes electron-donor compounds enhancing and modifying catalytic properties.

In preparing heterogeneous polymerizing catalysts, it is customary to employ a carrier compound for a component enhancing the polymerizing activity of procatalysts, on which a transition metal compound is deposited. The most commonly used carrier compounds are silicon dioxide, aluminium oxide, magnesium oxide, titanium oxide, carbon in different forms, and polymers of different types. As significant carrier compounds have proved magnesium compounds, such as alkoxides, hydroxides, hydroxide halides and halides, the last mentioned of which, in particular magnesium chloride, have recently proved to be the most significant carrier components in procatalyst compositions.

Since the magnesium halides in their basic crystal form are not very efficiently activated with a transition metal compound, their crystal structure is required to be deformed. Conventionally this takes place by grinding e.g. in a ball mill, whereby a finely ground powder is resulted, having typically a large specific surface, the crystal grids of the particles thereof being strongly deformed. When said powder is activated into procatalyst composition by depositing it with a transition metal compound, and thereafter it is reduced with an organometallic compound acting as cocatalyst, a highly active polymerizing catalyst is obtained.

To the usual grinding method of magnesium halide is, however, related a drawback that it consumes great quantities of energy, causes wear and corrosion in the equipment and, and is appropriate merely in preparing a catalyst using an elaborate input process.

A more modern and more efficient way of reducing the crystallinity of the magnesium halides and therewith increase their ability to be activated by transition metal compounds is to modify them chemically. Hereby, the magnesium halide, electron donor and transition metal compound are made, frequently in the form of solution, to react with one another to become readily isolated procatalyst compositions.

In the US. patent publications 4,124,532 and 4,174,429, the preparation of catalytically active complexes of said type are disclosed by causing magnesium halide and a transition metal compound to react in an appropriate proportion in an electron donor solvent. The completed complex can be isolated by evaporation crystallization of said solvent, or by precipitating said complex with the aid of a solvent in which it is not soluble. Since said complex compounds are produced as a result of spontaneous crystallization, their crystal structure is extremely regular and respectively, their activity is relatively limited.

In the US. patent publication No. 4,302,566 and in the EP application No. 6110 is disclosed a precursor prepared from magnesium halide, transition metal compound and electron donor. The precursor is prepared by precipitating from an electron donor solution, whereafter it is separated and mixed with an aluminium alkyl activating it and with a separate inert carrier.

No substantially amorphous procatalyst composition is produced in said procedures, either, because said precursor is crystallized spontaneously during preparation, and thereafter its morphology will not substantially be changed.

In the other patent publications, Ziegler-Natta procatalysts included in silicon dioxide or magnesium silicate carrier are described, but the superior capacity of magnesium compounds to activate with a transition metal compound has not been utilized. Said patent publications are, for instance the following: WO 8 802 376, EP 215916, EP 120503, EP 91135, EP 80052, EP 55605, EP 43220, EP 20818, US 4,482,687, US 4,383,095, US 4,354,009, US 4,349,648, and 4,359,561.

In the US. patent application No. 4,670,526, an activation process of a catalyst is described, wherein divalent magnesium halide together with a Lewis acid, e.g. ethyl aluminium dichloride, is dissolved in an excess of an electron donor, and that the obtained complex is separated from an excess of the electron donor before the treatment with a titanium or vanadine compound. The complex is precipitated alternatively also on top of silicon dioxide. Said method is encumbered, for instance, with a drawback that no Lewis acid addition is needed.

The object of the present invention is to provide a procatalyst composition produced from magnesium halide, electron donor and transition metal compound which in design is as amorphous as possible, and as a result, as active as possible. In the invention the aim is also to develop a procedure for preparing a solid procatalyst composition of a catalyst system intended for polymerizing olefins in which no separate phase for grinding magnesium halide is required, and in which the treatment with a transition metal compound is carried out at such a late phase of preparation that, as it becomes complicated, no recrystallization and loss of activity of the product any longer takes place. Furthermore, endeavours are made in the invention to find as relevant use for the new procatalyst composition in polymerizing or copolymerizing olefins and specifically alpha olefins as possible. Said aims are achieved with a procedure, a procatalyst and its use which are characterized in what is disclosed in the characteristic features parts of respective claims 1,6 and 13.

For that reason, the invention is based on the idea that a change of morphology of the magnesium halide, which is a prerequisite of the activity, is provided by impregnating a separate, inert carrier with an appropriate electron donor solution of a magnesium halide. When from the impregnated separate carrier an excess of the electron donor is removed e.g. by means of evaporation, it results in a solid carrier coated with magnesium-halide-electron-donor which is finally treated with a transition metal compound. A useful feature of the invention lies therein that the treatment with said transition metal compound takes place later than in conventional homogenenous activations of the procatalyst composition, whereby the recrystallisation of the procatalyst composition is prevented and the activity of the mixture is therefore preserved. Said phenomenon has by a X-ray diffractometry been stated in that the procatalyst composition of the invention contains no peaks indicating the crystallinity of the complexes consisting of magnesium halide, electron donor and transition metal compound.

The preparation of a solid catalyst system intended for polymerizing olefins, therefore, starts by dissolving anhydraous magnesium halide in an appropriate electron donor. The employed magnesium halide refers specifically to a magnesium halide, in which the halide is chloride, bromium, iodine, or a mixture thereof. The most advantageous magnesium halide is a dry magnesium chloride with no crystal water $MgCl_2$. The electron donor is advantageously an alkyl ester of carboxyl acid, an aliphatic ether, cyclic ether or aliphatic ketone. It is quite specifically an alkyl ester of aliphatic carboxyl acid containing 1 to 10 carbon atoms, and more particularly, ethyl acetate. The electron donor can be used in isolation or as a composition of several electron donors. If needed, dissolving the magnesium halide into the electron donor takes place under stirring at elevated temperature.

With the electron donor solution of the magnesium halide obtained in the subsequent step, a separate carrier is impregnated. For carrier can be used any organic or inorganic substance which can be impregnated with electron donor solution of the magnesium halide and which will not later interfere with the activation with the transition metal compound. Suitable organic separate carriers are, for instance, polymers, such as ABS, PVC, PS, PP, etc. Suitable inorganic substances are silicon dioxide, aluminum oxide, magnesium oxide, magnesium silicate, titanium oxide, etc. Particularly advantageous carriers are silicon dioxide, magnesium silicate and aluminium oxide, among which the most advantageous is silicon dioxide. The carriers are added into the impregnation solution advantageously in dry powder form. The particle size of the powder is 10-100 $\mu$m, advantageously 20-60 $\mu$m. It is selected advantageously so that its particle distribution is as narrow as possible. After the impregnation, which has been performed, if required, at elevated temperature, an excess of the electron donor is removed, advantageously by evaporation before being activated with a transition metal compound. The transition metal compound treatment is performed advantageously by preparing a hydrocarbon suspension from the above impregnated and dried carrier particles into which the transition metal compound is added, first very carefully. This treatment can be accelerated using a mixture and elevated temperature. A separate carrier may before impregnation be pretreated with heat for obtaining the desired morphology. In addition to the thermal treatment, it can be suspended in hydrocarbon and treated with a substance such as trialkyl aluminium. After the treatment the suspension is dried into powder. Said measure may be performed with any separate carrier mentioned above, but it is particularly well suited for the pretreatment of silicon dioxide. The transition metal compound is advantageously a compound of titanium, vanadium and/or zirconium containing halogen. Particularly advantages are titanium compounds, and the most advantageous is titanium tetrachloride $TiCl_4$.

The procatalyst composition obtained subsequent to the transition metal compound treatment is washed, dried and analysed. The obtained procatalyst composition contains the separate carrier about 50-90% by weight, and advantageously 70-80% by weight. The quantity of titanium is required to be below

3

10% by weight, and advantageously about 1-5% by weight. The best polymerization results are obtained with a procatalyst composition in which the ratio Ti/Mg ranges from appr. 0.2 to 1.5, advantageously 0.5 to 1.0, the Cl/Mg ranges between 2.0 and 7.0, advantageously 3.0 and 6.0, the electron donor/Mg is below 2.0, advantageously below 1.75.

In the tests performed in association with the invention, it was surprisingly found that the performance of the catalyst prepared as described in the foregoing was excellent and that it was particularly well suited for polymerizing ethylene at a high activity and with good hydrogen and comonomer sensitivity. The obtained polymer exposes a narrow molecular weight distribution (MWD) and a good morphology for various utilizations. If two or more reactors are employed, a polymer is obtained the molecular weight distribution of which is bimodal or wide. The procatalyst composition of the invention may, along with a conventional cocatalyst, such as trialkyl aluminium, be used for preparing also other polyolefins, such as polypropene, poly-1-butene, poly-4-methyl-1-pentene, whereby crystalline and tactical polymers are obtained.

When examining the procatalyst composition of the invention with X-ray diffraction, such a particular feature was observed that no peaks indicating crystallinity are not exhibited in the diffractograms. Thus, no crystalline complexes of magnesium halide and electron donor, nor of transition metal compound and of the electron donor appear to be present. The diffractograms were taken in conjunction with the embodiment examples for the $MgCl_2$-ethyl acetate-$TiCl_4$ system.

The US. patent applications Nos. 4,124,532 and 4,174,429 describing the state of art disclose that various molar quantities of products containing e.g. $MgCl_2$ + $TiCl_4$ (or $TiCl_3$) plus ethyl acetate with crystalline peaks have been obtained, said peaks being used for identification. In the present invention, the X-ray diffractograms contain no or hardly any peaks in the range 0 to 13° (20), which would be suitable for identificaiton. In the articles Z. Anorg. Allg. Chem. 482 (1981) 121-132 and 496 (1983) 205-216, the synthesis of anducts $TiMgCl_6(CH_3COOC_2H_5)_4$ and $TiMgCl_5(OOH_2Cl).(Cl.COOC_2HH_5)$ and analysis of crystallisation with the aid of X-rays is described. Based on the data of said articles, the catalyst of the invention has no crystallinity. Considering that endeavours are in general made to avoid crystallinity, it is likely that said amorphity may embody the secret of the high activity of the catalyst component of the invention.

The procatalyst component of the invention involves furthermore the advantage that the distribution of its particle size is very narrow. In addition, the flow rate of the obtained polymer is of high standard and its bulk density is over 0.35 g/ml.

Eight figures are enclosed with the present application, the first said figures presenting the procedure of the invention and the rest of them the results of the analyses obtained in the tests.

Fig. 1 presents the procedure of an advantageous embodiment of the invention for preparing a procatalyst composition, in schematical diagram.

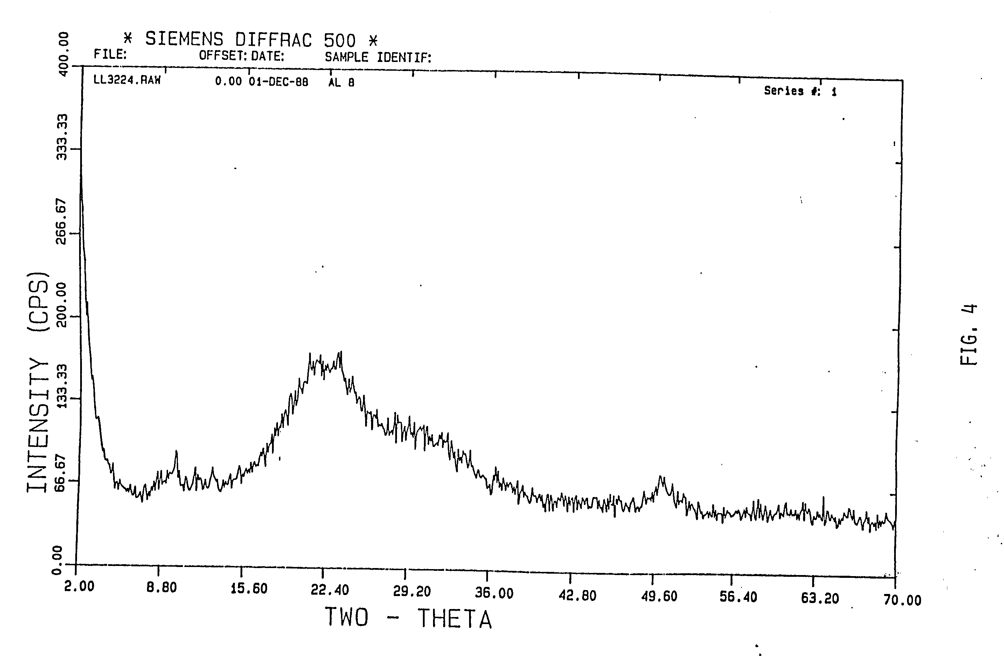

Figs. 2-4 present the X-ray diffractograms of the procatalyst compositions prepared according to respective examples 1-3.

Figs 5-8 present the MWD graphs of the polyethylene products prepared according to respective examples 1, 3, 7 and 8.

## Examples

### Separate carriers

When for a separate carrier is used silicon dioxide, it is first treated at 600°C, suspended together with pentane and is mixed with triethyl aluminium (5.5% by weight). The suspension is dried at 60°C with nitrogen flow, whereby freely running powder is obtained.

### Polymerizing ethylene

The test polymerization of ethylene was performed in each example in the following way: 2 l of pentane were introduced into a 3-liter autoclave which had been purified with active aluminium oxide and molecular sieves. 200 mg of procatalyst composition were fed into a reactor suspended in a small quantity of pentane. The temperature was raised to 80°C, and 5 ml of triethyl aluminium were added in the form of 10% by weight solution. A 0.5-liter pressurized reactor, that is a bomb, was pressurized at 5 bar hydrogen pressure, and ethylene was fed into the reactor until the total pressure was 15 bar. Thereafter, the temperature was raised to 90°C and was held at that temeprature for 1 hr; the total pressure was held constant with the aid of ethylene feeding.

## Example 1

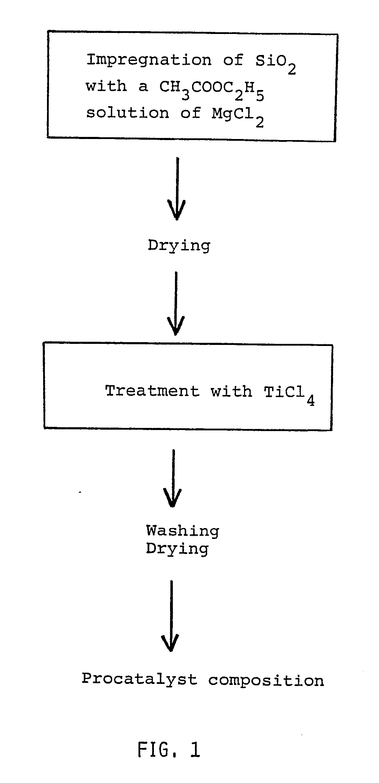

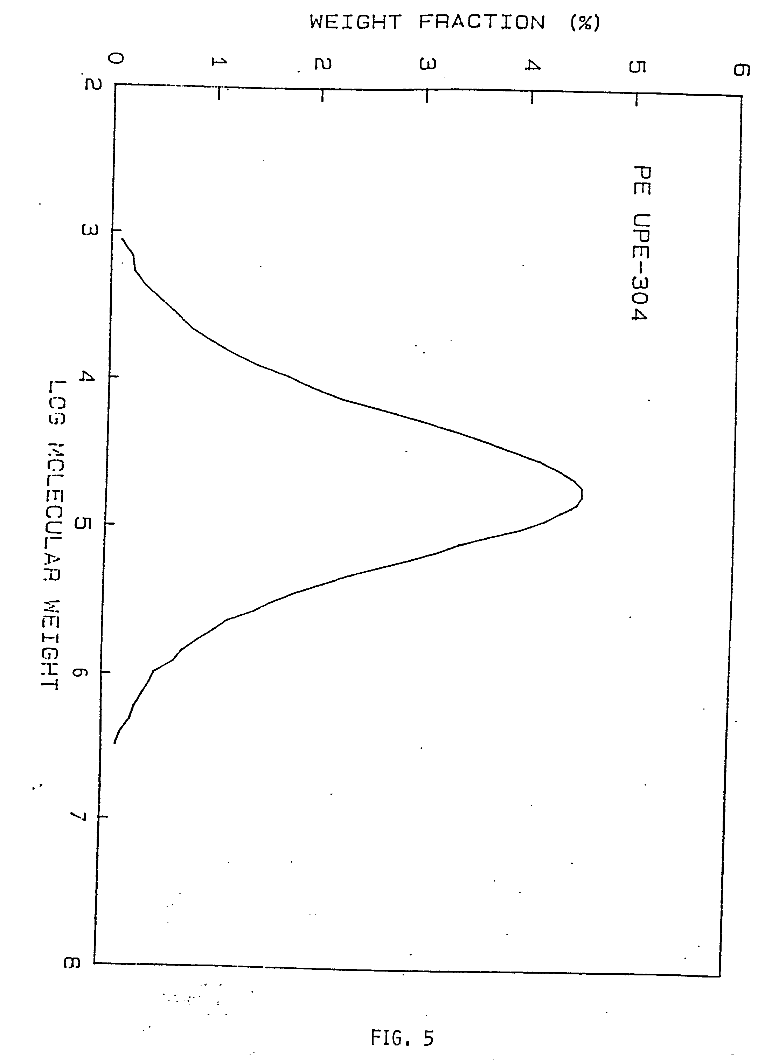

In a 50 ml matress were dissolved 0.00525 mol of anhydrous MgCl₂ in 22 ml of ethyl acetate (EA) mixing for 2 hrs at 70°C. Thereafter, 5 g of silicon dioxide, which had been treated in the above-described manner, were fed into the matress, and impgrenated with the above solution for 45 min at 80°C. Thereafter, most of the ethyl acetate was discharged with a nitrogen gas flow, its temperature being 80°C. After the drying process, heptane was added for obtaining a suspension and 0.158 mol of TiCl₄ was fed thereto at 0°C. The temperature was raised under stirring to 60°C. The solvent was removed and the obtained crude procatalyst composition was washed at least 4 times with heptane and thereafter once with pentane. Finally, the product was dried. The results of the analysis of the procatalyst composition and the properties of the polyethylene obtained therewith are presented in Table 1. In Fig. 1 is presented the X-ray diffractogram of the procatalyst composition, and in Fig. 5, the MWD graph of the polyethylene obtained with the aid of the procatalyst composition and the cocatalyst.

## Example 2

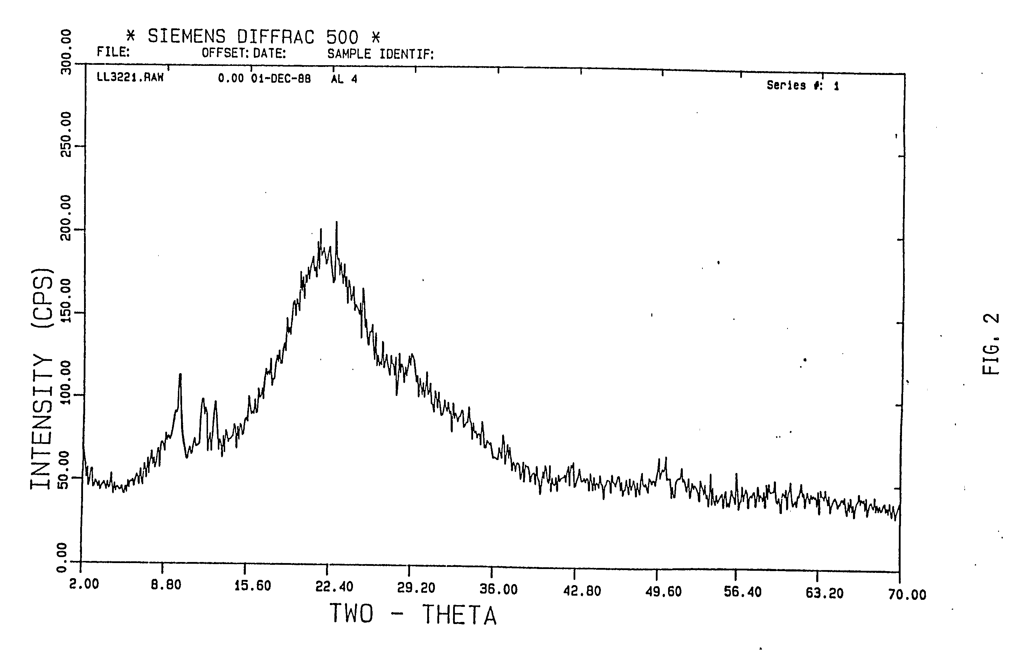

The same procedure was used as in Example 1, with the exception that the quantity of TiCl₄ was 0.052 mol. The results are presented in Table 1 and the X-ray diffractogram of the procatalyst composition obtained therewith, in Fig. 2.

## Example 3

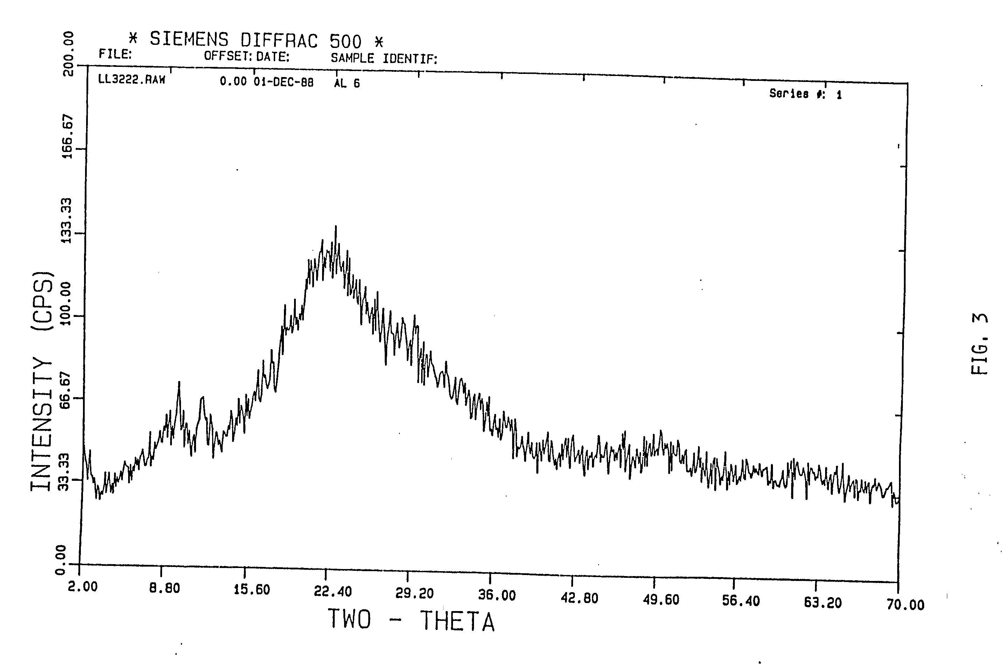

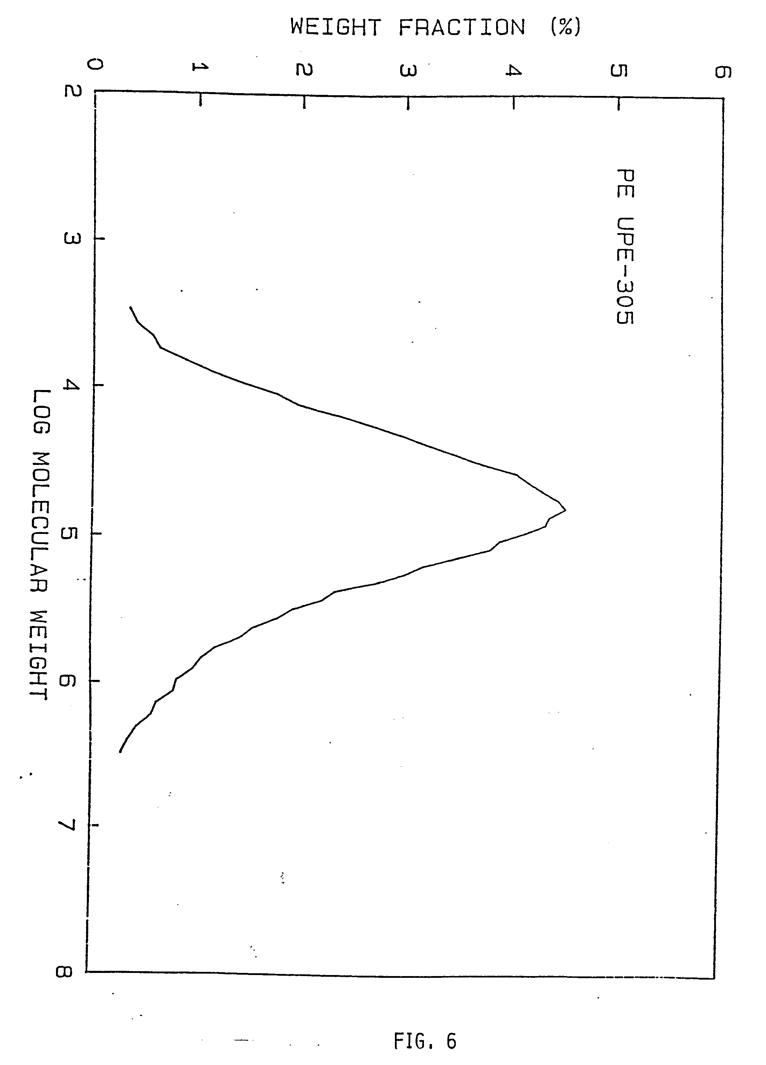

The same procedure as in Example was used but with the following exceptions: 0.26 mol of TiCl₄ were introduced into the reactor at 20°C and the temperature was raised to 60°C for 4 hrs, while stirring throughout the period. The results are presented in Table 1, the X-ray diffractogram of the obtained procatalyst composition in Fig. 3 and the MWD graph of the polymer obtained, in Fig. 6.

## Example 4 (reference example)

In this example the procedure of prior art, conforming to the state of art, was employed, in which, however, the same substance quantities were employed as in the present invention. To begin with, the precursor was prepared by dissolving 0.00525 mol of anhydrous MgCl₂ in 22 ml ethyl acetate and 0.0525 mol of TiCl₄ was added for 15 min, stirring throughout the period. The temperature was raised to 80°C, and 50 g of silicon dioxide were added, and it was held at said temperature for 1 hr. Thereafter, the procatalyst composition was dried. The results are presented in Table 1, and one may conclude from them that when the precursor is first prepared in accordance with the state of art and thereafter it is impregnated in the silica, no adequate results are obtained.

## Example 5 (reference example

In this example the procedure was the same as in Example 4, with the exception that the quantity of TiCl⁴ was 0.091 mol. Neither in the present instance are the results presented in Table 1 satisfactory.

## Example 6 (reference example)

In this example the procedure was the same as in Example 5, but now TiCl₄ was added in the mixture of MgCl₂ and ethyl acetate and it was stirred for 1 hr at 70°C. In Examples 4 and 5 the MgCl₂ was first dissolved in the ethyl acetate and thereafter the TiCl₄ was added. It is seen in the results in Table 1 that not in this instance they were satisfactory, either.

Example 7

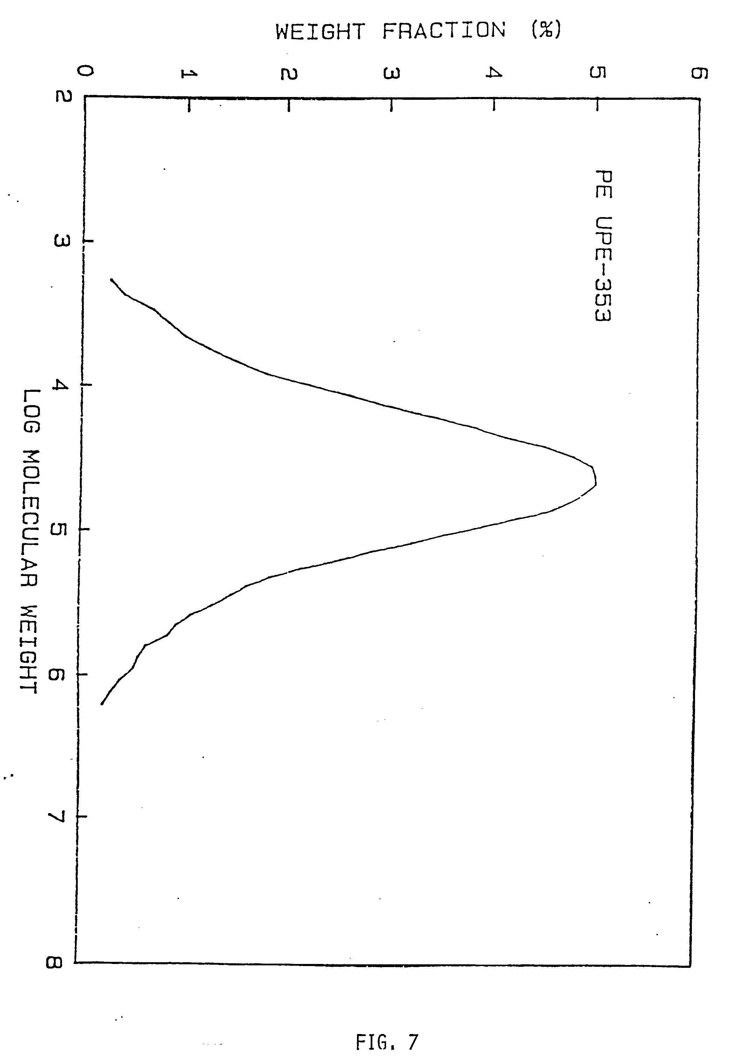

In this example ethylene was polymerized when 300 ml of 4-methyl-1-pentene were present, and a catalyst prepared according to Example 3 and the polymerization procedure described at the beginning were employed. For the result, a polymer was obtained with an activity of 3582 g polymer/g procatalyst composition . h and the melt index $MI_{21}$ of the polymer was 109.2, $MI_{2.16}$ was 3.96, MFR was 27.58 and the density of the polymer was 0.944g/ml. The MWD graph of the polyethylene is presented in Fig. 7.

Example 8

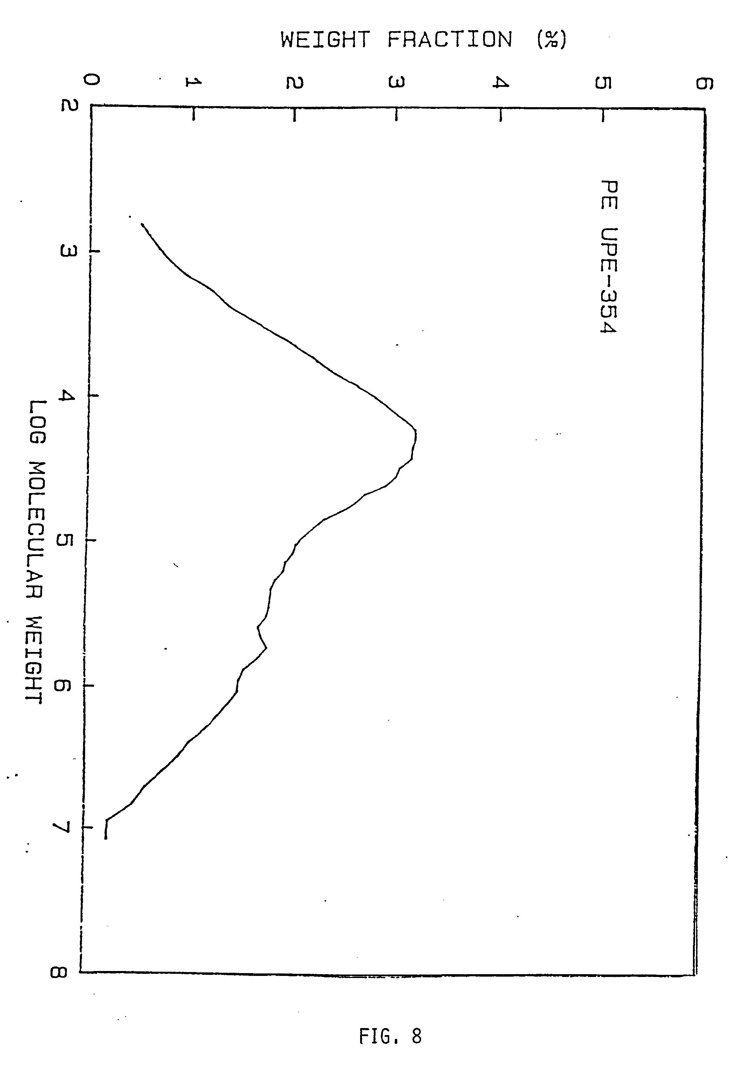

The procedure was the same as in Example 1, but the quantity of hydrogen was now equivalent to 10 bar partial pressure at 90°C. The partial pressure of ethylene was about 3.5 bar. After 150 g ethylene were polymerized, the reaction was interrupted by flushing the reactor three times with nitrogen at a low temperature. The second polymerizing phase was started by introducing 300 ml of 4-methyl-1-pentene into the reactor and continuing the polymerization with 150 g of ethylene at 70°C without hydrogen. The melt indeces of the polymer thus obtained were $MI_{21}$ = 7.90 and $MI_{2.16}$ = 0.07, whereby the ratio thereof MFR2 was 112.8 and the density of the polymer was 0.954 g/ml. The MWD graph of the polymer is presented in Fig. 8.

Example 9

In this example propene was polymerised with the aid of a procatalyst composition prepared with the method according to Example 3. Into a 2-liter autoclave flushed with nitrogen were introduced 990 ml of heptane. 200 mg of the procatalyst composition were employed, and for cocatalyst was used triethyl aluminium, of which was added 5 mmol. In addition, 0.25 mmol cyclohexyl dimethoxy silane were used for electron donor. Hydrogen was added in the mixture, and propene was fed at 7 bar pressure. At the same time the temperature was raised to 70°C. Propene was added continuously to replace the reacted monomer. In four hours' time the reaction was terminated, and 0.46 kg of PP/g procatalyst composition were obtained, and the isotactic index of the polypropene obtained was 92.5%. The polymer was a freely running powder, its mass, that is the bulk density, was high, 0.37 g/ml.

Table 1

| | Example | Weight % Ti procatalyst for procat. composition | Weight % Ti for procat. composition | Composition of procat. composition in mol | | | | |
|---|---|---|---|---|---|---|---|---|
| | | | | Mg | Ti | Cl | EA | |
| | 1 | 26.1 | 3.2 | 1 | 0.96 | 5.48 | 1.23 | |
| | 2 | 28.7 | 2.7 | 1 | 0.81 | 5.48 | 1.73 | |
| | 3 | 27.2 | 2.6 | 1 | 0.57 | 3.90 | 0.58 | |
| | 4 * | 38.6 | 3.5 | 1 | 1.28 | 6.61 | 3.86 | |
| | 5 * | 49.4 | 4.2 | 1 | 2.19 | 9.85 | 8.57 | |
| | 6 * | 55.9 | 4.9 | 1 | 2.07 | 9.50 | 4.96 | |

* reference example

| Example | Yield g PE/g procatalyst composit..h | Yield g PE/g procatal..h | Melt index | | Mw | | Bulk density g/ml |
|---|---|---|---|---|---|---|---|
| | | | MI 21 | MI 2.16 | MFR | Mn | |
| 1 | 2052 | 7862 | 35.25 | 1.26 | 27.98 | 5.10 | 0.35 |
| 2 | 2356 | 8209 | 21.14 | 0.74 | 28.57 | 5.10 | 0.36 |
| 3 | 2600 | 10000 | 18.69 | 0.62 | 30.15 | 4.65 | 0.38 |
| 4 | 1810 | 4689 | 24.09 | 0.86 | 28.01 | 5.40 | 0.35 |
| 5 | 1400 | 2834 | 20.12 | 0.68 | 29.59 | 5.30 | 0.37 |
| 6 | 832 | 1488 | 22.09 | 0.72 | 30.68 | 5.50 | 0.37 |
| 7 *) | 3582 | 10974 | 109.2 | 3.96 | 27.58 | 4.2 | 0.35 |
| 8 *) | a) | a) | 7.90 | 0.07 | 112,85 | 33.3 | 0.34 |

*) The procatalyst composition the same as in Example 3.
a) No activity value is given because it was run in two phases.

## Claims

1. A procedure for preparing a solid procatalyst composition of a catalyst system intended for polymerizing olefins, in which an anhydrous magnesium halide is dissolved and/or combined with an electron donor and treated with a transition metal compound, characterized in that a separate carrier is impregnated with the electron donor solution of the magnesium halide, an excess of the electron donor is removed e.g. by drying, and the impregnated separate carrier is treated with a transition metal compound.

2. Procedure according to claim 1, characterized in that the magnesium halide is an anhydrous magnesium chloride and the electron donor is a $C_1$-$C'_0$ alkyl ester of an aliphatic carboxyl acid, advantageously ethyl acetate.

3. Procedure according to claim 1 or 2, characterized in that the carrier is silicon dioxide, magnesium oxide or a polymer, however advantageously silicon dioxide.

4. Procedure according to claim 3, characterized in that the silicon dioxide is such silicon dioxide which has been held at 600° C, suspended in pentane, treated and dried with trialkyl aluminium.

5. Procedure according to any one of the preceding claims, characterized in that the transition metal compound is a titanium halogen compound, such as titanium tetrachloride, which is advantageously added to the hydrocarbon suspension of a impregnated and dried separate carrier.

6. A solid procatalyst composition of a catalyst system intended for polymerizing olefins, comprising a reaction product of a magnesium halide, electron donor and transition metal compound, characterized in that the reaction product is, when measured with an X-ray diffractometer in the range 0 to 13° (20), substantially amorphically deposited on the surface of a separate carrier.

7. Procatalyst composition according to claim 6, characterized in that it is produced by impregnating said separate carrier with an electron donor solution of magnesium halide by removing an excess of the electron donor e.g. by drying, and treating said impregnated separate carrier with a transition metal compound.

8. Procatalyst composition according to claim 6 or 7, characterized in that the carrier is silicon dioxide, magnesium silicate, aluminium oxide or a polymer, advantageously however silicon dioxide.

9. Procatalyst composition according to claim 6, 7 or 8, characterized in that the magnesium chloride is a magnesium chloride, and that the electron donor is a $C_1$-$C_{10}$ alkyl ester of an aliphatic carboxyl acid, advantageously ethyl acetate.

10. Procatalyst composition according to any one of claims 6 to 9, characterized in that the transition metal compound is a titanium halogen compound, advantageously titanium tetrachloride.

11. Procatalyst composition according to any one of claims 6 to 10, characterized in that the share of the separate carrier is 50 to 90% by weight, advantageously 70 to 80% by weight of the dry procatalyst composition.

12. Procatalyst composition according to any one of claims 6 to 11, characterized in that it includes the following molar ratios: Ti/Mg = 0.2 to 1.5, advantageously 0.5 to 1.0; Cl/Mg = 2 to 7, advantageously 3 to 6; and electron donor (ethyl acetate)/Mg = below 2, advantageously below 1.75.

13. The use of a procatalyst composition according to any one of claims 6 to 12 or prepared with a procedure according to any one of claims 1 to 5 together with an aluminium organometallic cocatalytic compound and possibly an external donor for polymerizing and copolymerizing alpha-olefins, in particular ethylene.

14. The use according to claim 13, characterized in that the polymerization is performed in one step into a polymer which has a narrow molecular weight distribution, or in two or several steps into a polymer which has a bimodal or wide molecular weight distribution.

Impregnation of $SiO_2$
with a $CH_3COOC_2H_5$
solution of $MgCl_2$

↓

Drying

↓

Treatment with $TiCl_4$

↓

Washing
Drying

↓

Procatalyst composition

FIG. 1

FIG. 2

FIG. 3

FIG. 4

FIG. 5

FIG. 6

PE UPE-353

FIG. 7

FIG. 8